## Europäisches Patentamt

## European Patent Office

## Office européen des brevets

(19)

(11) Veröffentlichungsnummer: **0 130 411**
**B1**

(12) **EUROPÄISCHE PATENTSCHRIFT**

(45) Veröffentlichungstag der Patentschrift:
**11.05.88**

(21) Anmeldenummer: **84106497.5**

(22) Anmeldetag: **07.06.84**

(51) Int. Cl.⁴: **H 02 M 3/335, H 02 M 3/338**

(54) **Elektronisches Schaltnetzteil.**

(30) Priorität: **01.07.83 DE 3323747**

(43) Veröffentlichungstag der Anmeldung:
**09.01.85 Patentblatt 85/2**

(45) Bekanntmachung des Hinweises auf die Patenterteilung:
**11.05.88 Patentblatt 88/19**

(84) Benannte Vertragsstaaten:
**AT BE CH DE FR GB IT LI LU NL SE**

(56) Entgegenhaltungen:
**EP - A - 0 030 276**
**EP - A - 0 056 593**
**US - A - 4 387 418**

(73) Patentinhaber: **Braun Aktiengesellschaft,
Rüsselsheimer Strasse 22, D-6000 Frankfurt/Main (DE)**

(72) Erfinder: **Schwarz, Gerhard, Eggestrasse 16,
D-5990 Altena (DE)**

(74) Vertreter: **Einsele, Rolf, Braun Aktiengesellschaft
Postfach 1120 Frankfurter Strasse 145, D-6242 Kronberg
Taunus (DE)**

ACTORUM AG

## Beschreibung

Die Erfindung bezieht sich auf ein elektronisches Schaltnetzteil zur Speisung eines Verbrauchers aus einer Eingangsspannungsquelle veränderlicher Spannungshöhe mit einem primär getakteten Sperrwandler mit einem Übertrager, dessen Primärwicklung in Reihe zur Kollektor-Emitter-Strecke eines ersten Transistors parallel zur Eingangsspannungsquelle und dessen Sekundärwicklung in Reihe zum Verbraucher und einer ersten Diode geschaltet ist, wobei der Ermitter des ersten Transistors über einen ersten Widerstand mit Masse- oder Bezugspotential und die Basis des ersten Transistors über die Reihenschaltung eines Rückkopplungskondensators und eines Rückkopplungswiderstandes an das mit Masse- oder Bezugspotential über die erste Diode verbundene Wicklungsende der Sekundärwicklung des Übertragers, über einen zweiten Widerstand an die Primärwicklung des Übertragers und an den Kollektor eines zweiten Transistors angeschlossen ist, dessen Emitter mit Masse- oder Bezugspotential verbunden ist und dessen Basis über ein erstes Referenzelement an die Verbindung der Sekundärwicklung des Übertragers mit dem Verbraucher angeschlossen ist.

Elektronische Schaltnetzteile dienen zur Konstantspannungs- und/oder Konstantstromversorgung elektrischer oder elektronischer Geräte und sind in vielen Fällen als primär oder sekundär getaktete Sperr- oder Durchflusswandler bzw. Gegentaktwandler aufgebaut. Sie weisen in der Regel eine Gleichrichterschaltung mit nachgeschalteter Sieb- und Glättungsanordnung auf, an die ein Übertrager angeschlossen ist. In Reihe zur Primärwicklung des Übertragers ist ein elektronischer Schalter vorgesehen, der in Abhängigkeit von einer oder mehreren Regelgrössen ein- und ausgeschaltet wird, wobei die in dem Übertrager gespeicherte Energie beim Sperrwandler in der Sperrphase, beim Durchlasswandler in der Durchlassphase bzw. beim Gegentaktwandler sowohl in der Sperr- als auch in der Durchlassphase über eine entsprechend gepolte Diode an einen elektrischen Verbraucher abgegeben wird. Um bei der Verwendung eines Übertragers die Baugrösse des Übertragers gering zu halten, wird der elektronische Schalter mit einer Frequenz von ca. 20 kHz betrieben.

Die wahlweise netzabhängig oder netzunabhängig von dem elektronischen Schaltnetzteil gespeisten elektrischen Geräte sollen in einem möglichst weiten Spannungsbereich von beispielsweise 90 bis 240 Volt Gleich- oder Wechselspannung betrieben werden können, ohne dass eine Umschaltung zur Anpassung an die jeweilige Spannungshöhe erforderlich ist. Darüber hinaus ist zum netzunabhängigen Betrieb eines elektrischen Kleingerätes wie beispielsweise eines elektrischen Trockenrasierapparates, eines Elektronenblitzgerätes, eines Rundfunk- oder Fernsehgerätes oder dgl. ein Akkumulator erforderlich, der in vielen Anwendungsfällen als Nickel-Kadmium-Akkumulator ausgebildet ist. Die Lebensdauer eines derartigen Akkumulators hängt im wesentlichen von der Art und Weise des Ladebetriebes und der Höhe der in ihm gespeicherten Ladung ab. Dies macht es erforderlich, dass auch bei unterschiedlichen Eingangsspannungen im obgenannten Bereich ein konstanter Ausgangsstrom zur Ladung des Akkumulators gewährleistet sein muss.

Aus der DE-OS 2 430 481 ist ein Sperrwandler mit einem Übertrager bekannt, in Reihe zu dessen Primärwicklung die Schaltstrecke eines Transistors geschaltet ist. Die Basis des Transistors ist über eine Steuerwicklung mit der Reihenschaltung eines Widerstandes und eines Kondensators, parallel zu dem eine Diode angeordnet ist, verbunden. Diese Anordnung dient dazu, einen Blitzkondensator zur Zündung der Blitzlampe eines Elektronenblitzgerätes in kürzestmöglicher Zeit aufzuladen. Durch die Anordnung der Reihenschaltung des Widerstandes und des parallel zu der Diode geschalteten Kondensators wird sichergestellt, dass die Einschaltphase des Sperrwandlers eingeleitet wird, bevor die in dem Übertrager gespeicherte Energie in der Sperrphase des Sperrwandlers vollständig an den Verbraucher bzw. Blitzkondensator abgegeben wurde. Aufgrund der geteilten Primärwicklung des Übertragers des bekannten Sperrwandlers wird beim Wiedereinschalten des Transistors die Ausgangsspannung nicht unmittelbar über die dem Rückkopplungskondensator parallelgeschaltete Diode sowie dem in Reihe dazu geschalteten Widerstand an die Basis des Schaltertransistors gelegt, sondern gelangt über die zweite Hälfte der Primärwicklung auf die Basis des Transistors.

Aus der DE-OS 3 101 375 (= EP-A-56 593) ist eine Schaltungsanordnung zur geregelten Speisung eines Verbrauchers bekannt, die an verschiedenen Gleich- oder Wechselspannungen sowie an verschiedenen Wechselstromfrequenzen ohne Umschaltung betrieben werden kann. Bei dieser bekannten Schaltungsanordnung ist ein Sperrwandler vorgesehen, der mittels zweier steuerbarer Halbleiterschalter abhängig von dem durch die Primärwicklung eines Übertragers fliessenden Strom von der zugeführten Eingangsspannung und vom Ladezustand eines als Verbraucher dienenden Akkumulators, der parallel zu einem Gleichstrommotor geschaltet ist, so gesteuert wird, dass die Ausgangsspannung beim Betrieb des Gleichstrommotors bzw. der abgegebene Ladestrom beim Ladebetrieb des Akkumulators konstant ist. Dadurch wird gewährleistet, dass beim Netzbetrieb entweder die volle Motorleistung oder bei ausgeschaltetem Motor ein konstanter Ladestrom für den Akkumulator gewährleistet ist. Beim netzunabhängigen Betrieb wird der Gleichstrommotor aus dem Akkumulator gespeist.

Bei dieser bekannten Schaltungsanordnung ist parallel zur Eingangsspannungsquelle die Reihenschaltung der Primärwicklung des Übertragers mit der Schaltstrecke eines ersten Transistors und eines ersten Widerstandes geschaltet. Parallel zur Reihenschaltung der Basis-Emitter-Strecke des ersten Transistors und des ersten Widerstandes ist sowohl ein erstes Referenzelement als auch die Laststrecke eines zweiten Transistors geschaltet. Die Basis des ersten Transistors ist sowohl über einen Widerstand mit der Primärwicklung des Übertragers als auch über einen Rückkopplungskondensator und einen Rückkopplungswiderstand mit dem einen Wicklungsende der Sekundärwicklung des Übertragers verbunden, während die Basis des zweiten Transistors über ein zweites Referenzelement mit dem anderen Wicklungsende der Sekundärwicklung des Übertragers verbunden ist.

Der aus der Parallelschaltung des Akkumulators mit dem Gleichstrommotor bestehende Verbraucher ist über eine entsprechend gepolte Diode parallel zur Sekundärwicklung des Übertragers geschaltet, so dass die über den Übertrager übertragene Energie in der Sperrphase des ersten Transistors an den Verbraucher abgegeben wird. Die wahlweise Speisung des Akkumulators bzw. des Gleichstrommotors hängt von der Schaltstellung zweier den Akkumulator und den Gleichstrommotor verbindender Schalter ab, so dass im geschlossenen Zustand der Schalter der Gleichstrommotor betrieben wird, während im geöffneten Zustand der Schalter eine Ladung des Akkumulators mit konstantem Strom stattfindet.

Wird bei dieser bekannten Schaltungsanordnung eine Eingangsspannung an den Sperrwandler, an die Reihenschaltung aus der Primärwicklung des Übertragers, des ersten Transistors und des ersten Widerstandes angelegt, so wird der Rückkopplungskondensator über den an die Primärwicklung angeschlossenen Widerstand aufgeladen, bis die Spannung an der Basis des ersten Transistors so weit angestiegen ist, dass der erste Transistor leitend wird. Mit dem Einschalten des ersten Transistors steigt der durch die Primärwicklung des Übertragers fliessende Strom linear an, bis am ersten Widerstand eine den Emitterstrom des ersten Transistors proportionale Spannung abfällt, die der Zenerspannung des ersten Referenzelementes entspricht, so dass der Strom durch den ersten Transistor nicht weiter ansteigen kann. Dadurch bricht das magnetische Feld im Übertrager zusammen, so dass in der Sperrphase des ersten Transistors die im Kern des Übertragers gespeicherte magnetische Energie über die Sekundärwicklung abfliesst, wobei über die im Verbraucherstromkreis angeordnete Diode ein Ladestrom in einen parallel zum Verbraucher geschalteten Glättungs- bzw. Speicherkondensator fliesst, von dem auch der Akkumulator mit konstantem Strom bzw. der Gleichstrommotor mit konstanter Spannung versorgt wird. Übersteigt die Spannung die Zenerspannung des an die Basis des zweiten Transistors angeschlossenen Referenzelementes, so wird der zweite Transistor leitend und legt die Basis des ersten Transistors an Massepotential, wodurch der erste Transistor bzw. der Sperrwandler unabhängig von der Eingangsspannung seinen Betrieb einstellt. Erst wenn die Spannung an dem Akkumulator infolge des Stromverbrauchs durch den Gleichstrommotor bzw. durch sonstige Ladeverluste so niedrig geworden ist, dass das zweite Referenzelement und damit der zweite Transistor wieder sperren, kann der Sperrwandler wieder anschwingen.

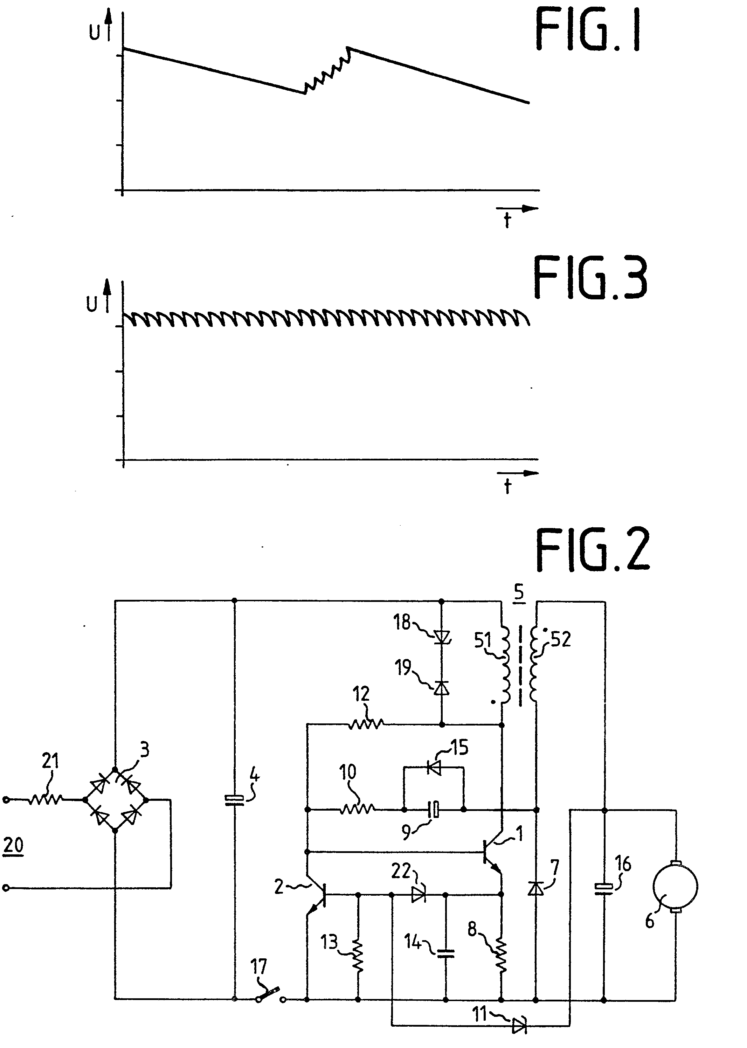

In Fig. 1 ist die am parallel zum Verbraucher geschalteten Kondensator anliegende Spannung dargestellt. Da der bekannte Sperrwandler nach dem Abschalten erst dann wieder einschaltet, wenn der Rückkopplungskondensator über den zwischen der Basis des ersten Transistors und dem einen Wicklungsende der Primärwicklung des Übertragers geschalteten Widerstand aufgeladen worden ist, ergibt sich eine am Ausgangskondensator anliegende sägezahnförmige Spannung, wobei die Frequenz der sägezahnförmigen Spannung durch die aus dem Produkt des Widerstandswertes des zwischen Primärwicklung und Basis des ersten Transistors geschalteten Widerstandes und der Kapazität des Rückkopplungskondensators bildenden Zeitkonstante bestimmt wird. Um diese Zeitkonstante möglichst klein zu halten, muss die Kapazität des Rückkopplungskondensators möglichst gering und die Kapazität des Ausgangskondensators ganz erheblich vergrössert werden, um die Ausgangsspannung entsprechend zu glätten. Eine Verringerung des Widerstandswertes des zwischen Primärwicklung des Übertragers und Basis des ersten Schalttransistors geschalteten Widerstandes ist nur in engen Grenzen möglich, da bei gesperrtem Sperrwandler der Primärstrom über diesen Widerstand und den im Sperrzustand leitenden zweiten Transistor fliesst und ein zu geringer Widerstand einen zu grossen Strom und damit zu grosse Verluste der Schaltung zur Folge hätte. Aufgabe der vorliegenden Erfindung ist es, die Spannungsschwankungen am Ausgangskondensator zur Abgabe einer möglichst konstanten Ausgangsspannung an einem Gleichstrommotor zu verringern bzw. auszuschalten.

Diese Aufgabe wird erfindungsgemäss dadurch gelöst, dass die Basis des zweiten Transistors zusätzlich über ein zweites Referenzelement an die Verbindung des Emitters des ersten Transistors mit dem ersten Widerstand angeschlossen ist und dass parallel zum Rückkopplungskondensator eine in Richtung eines den ersten Transistor ansteuernden Stromes gepolte Diode geschaltet ist, die mit dem Umschalten des zweiten Transistors in den Sperrzustand die an der Sekundärwicklung des Übertragers anstehende Ausgangsspannung unmittelbar an die Basis des ersten Transistors legt.

Die erfindungsgemässe Lösung stellt eine bis auf die Schaltfrequenz des Sperrwandlers konstante Ausgangsspannung am Ausgangskondensator und damit eine konstante Betriebsspannung für den angeschlossenen Gleichstrommotor sicher. Dabei stellt die parallel zum Rückkopplungskondensator geschaltete Diode sicher, dass der Sperrwandler sofort nach dem Abschalten des zweiten Transistors wieder anschwingt, da die an der Sekundärwicklung des Übertragers anliegende Ausgangsspannung über die Diode den Transistor mit extrem kleiner Zeitkonstante ansteuert.

Zusätzlich ist eine freie Wahl des Rückkopplungskondensators, d.h. keine Beschränkung des Rückkopplungskondensators auf eine bestimmte Mindestgüte und Toleranz erforderlich. Darüber hinaus kann der der Glättung dienende Ausgangskondensator bei gleicher Glättungswirkung mit erheblich geringerer Kapazität ausgelegt werden.

Anhand eines in der Zeichnung dargestellten Ausführungsbeispiels soll der der Erfindung zugrundeliegende Gedanke näher erläutert werden. Es zeigen:

Fig. 1 eine zeitliche Darstellung der Spannung am Ausgangskondensator nach dem Stand der Technik,

Fig. 2 die Schaltungsanordnung eines elektronischen Schaltnetzteiles und

Fig. 3 den Spannungsverlauf am Ausgangskondensator beim Betrieb des elektronischen Schaltnetzteiles gemäss Fig. 2.

Das in Fig. 2 dargestellte elektronische Schaltnetzteil besteht aus einem über eine Gleichrichter-Brückenschaltung 3 und einen Eingangswiderstand 21 aus einem Gleich- oder Wechselspannungsnetz 20 gespeisten Sperrwandler. Die Spannung des speisenden Gleich- oder Wechselspannungsnetzes 20 kann im Bereich zwischen 90 bis 250 Volt und die Frequenz im Falle eines speisenden Wechselspannungsnetzes nahezu beliebig sein. Parallel zu den Eingangs-Gleichspannungsklemmen der Gleichrichter-Brückenschaltung 3 ist ein Eingangskondensator 4 zum Sieben und Glätten der Eingangsspannung geschaltet.

Parallel zum Eingangskondensator 4 ist die Reihenschaltung der Primärwicklung 51 eines Übertragers 5 mit der Laststrecke eines ersten Transistors 1 und eines ersten Widerstandes 8 geschaltet.

Die Sekundärwicklung 52 des Übertragers 5, deren Wickelsinn dem der Primärwicklung 51 entgegengerichtet ist, ist in Reihe zu einer Diode 7 und einer Parallelschaltung eines Kondensators 16 und eines Gleichstrommotors 6 als Verbraucher geschaltet.

Die Basis des ersten Transistors 1 ist über einen zweiten Widerstand 12 mit dem einen Wicklungsende der Primärwicklung 51 des Übertragers 5, über die Reihenschaltung eines Rückkopplungskondensators 9 und eines Rückkopplungswiderstandes 10 mit dem einen Wicklungsende der Sekundärwicklung 52 des Übertragers 5 und mit dem Kollektor eines zweiten Transistors 2 verbunden, dessen Emitter über einen Schalter 17 an die eine Gleichspannungsklemme der Gleichrichter-Brückenschaltung 3 angeschlossen ist.

Die Basis des zweiten Transistors 2 ist über ein erstes Referenzelement in Form einer Zenerdiode 11 mit dem anderen Wicklungsende der Sekundärwicklung 52 des Übertragers 5 bzw. mit dem Ausgangskondensator 16 oder dem Gleichstrommotor 6 und über ein zweites Referenzelement in Form einer zweiten Zenerdiode 22 mit dem Emitter des ersten Transistors 1 verbunden. Parallel zur Basis-Emitter-Strecke des zweiten Transistors 2 ist ein dritter Widerstand 13 und parallel zum ersten Widerstand 8 ein Kondensator 14 vorgesehen.

Die parallel zur Primärwicklung 51 des Übertragers 5 geschaltete Reihenschaltung einer Zenerdiode 18 und einer in entgegengesetzter Durchlassrichtung gepolten Diode 19 mit gemeinsamer kathodenseitiger Verbindung dient der Aufgabe, die sich aufgrund der Streuinduktivität bildenden Spitzen der Spannungs-Rückschlagimpulse zu beseitigen bzw. zu begrenzen.

Parallel zum Rückkopplungskondensator 9 ist eine Diode 15 mit anodenseitigem Anschluss an das eine Wicklungsende der Sekundärwicklung 52 des Übertragers 5 geschaltet.

Selbstverständlich kann analog zur eingangs dargestellten bekannten Schaltungsanordnung parallel zum Gleichstrommotor 6 über eine entsprechende Schalteranordnung ein Akkumulator vorgesehen werden, der zum netzunabhängigen Betrieb des Gleichstrommotors 6 herangezogen wird, wobei vorzugsweise eine in Reihe zum Akkumulator vorgesehene und entsprechend gepolte Diode ein Entladen des Akkumulators verhindert, wenn die Schaltung nicht vom Netz gespeist wird.

Analog zur eingangs beschriebenen Funktionsweise der bekannten Schaltungsanordnung wird bei Anlegen einer Netz-Wechselspannung an die Gleichrichter-Brückenschaltung 3 die gleichgerichtete Wechselspannung an den Glättungs- und Siebkondensator 4 gegeben, so dass der über die Primärwicklung 51 des Übertragers 5 und den zweiten Widerstand 12 fliessende Strom über den Rückkopplungswiderstand 10 den Rückkopplungskondensator 9 auflädt, bis die Spannung an der Basis des ersten Transistors 1 soweit angestiegen ist, dass der erste Transistor 1 leitend wird. Der dadurch bedingte Kollektorstrom fliesst durch die Primärwicklung 51 des Übertragers 5 und induziert in der Sekundärwicklung 52 eine positive Spannung, die über den Rückkopplungskondensator 9 und den Rückkopplungswiderstand 10 an die Basis des ersten Transistors 1 geführt wird und einen grösseren Basisstrom hervorruft. Mit dem Einschalten des ersten Transistors 1 steigt der durch die Primärwicklung 51 des Übertragers 5 fliessende Strom infolge der Induktivität der Primärwicklung 51 linear an, bis über dem ersten Widerstand 8 eine dem linear ansteigenden Strom proportionale Spannung abfällt, die von einer bestimmten Höhe an im zweiten Transistor 2 einen Basisstrom fliessen lässt, wodurch der zweite Transistor 2 eingeschaltet und damit das Potential an der Basis des ersten Transistors 1 auf Bezugspotential gezogen wird und somit der erste Transistor 1 abschaltet. Während der Sperrphase des ersten Transistors 1 fliesst die im Kern des Übertragers 5 gespeicherte magnetische Energie über die Sekundärwicklung 52 und die Diode 7 in den Ausgangskondensator 16 ab.

Übersteigt die am Ausgangskondensator 16 anstehende Spannung infolge des Ladezustandes des Ausgangskondensators 16 die Zenerspannung des ersten Referenzelementes 11, so wird unabhängig von der am ersten Widerstand 8 abfallenden Spannung der zweite Transistor 2 ständig leitend gehalten, so dass die Basis des ersten Transistors 1 ständig an Masse bzw. Bezugspotential anliegt, wodurch der Sperrwandler seinen Betrieb einstellt. Erst wenn die Spannung am Ausgangskondensator 16 infolge des Stromverbrauchs durch den parallel geschalteten Gleichstrommotor 6 so niedrig geworden ist, dass die Zenerspannung des ersten Referenzelementes 11 unterschritten wird, hängt der Sperr- bzw. Leitzustand des zweiten Transistors 2 und damit des ersten Transistors 1 wieder von der an dem ersten Widerstand 8 abfallenden Spannung in bezug auf die Zenerspannung des zweiten Referenzelementes 22 ab und der Sperrwandler kann wieder anschwingen.

Das zweite Referenzelement dient dabei dazu, den zweiten Transistor 2 dann einzuschalten, wenn die Zenerspannung des zweiten Referenzelementes 22 infolge der am Emitterwiderstand 8 ansteigenden Spannung überschritten wird.

Durch die Parallelschaltung der Diode 15 parallel zum Rückkopplungskondensator 9 kann der Sperrwandler bei Unterschreiten der Zenerspannung des ersten Referenzelementes 11 sofort wieder anschwingen, da die an der Sekundärwicklung 52 des Übertragers 5 anstehende Ausgangsspannung über die Diode 15 sofort eine den Transistor 1 ansteuernde Polarität bereitstellt. Dies geschieht mit so kleiner Zeitkonstante, dass der Basisstrom des ersten Transistors 1 in minimaler Zeit so stark ansteigt, dass ein vollständiges Durchschalten des ersten Transistors 1 ohne eine durch die Kapazität des Rückkopplungskondensators 9 und den Widerstandswert des Rückkopplungswiderstandes 10 bestimmte Zeitkonstante leitend wird und somit der Sperrwandler seinen Betrieb aufnimmt.

Wie der zeitlichen Darstellung der Spannung am Ausgangskondensator 16 gemäss Fig. 3 zu entnehmen ist, ergibt sich im Gegensatz zur sägezahnförmigen Spannung am Ausgangskondensator 16 eine nahezu konstante Spannung, deren Schwankungen nur noch von der Schaltfrequenz des Sperrwandlers abhängen, wenn die Spannung am Ausgangskondensator 16 noch nicht die Zenerspannung des ersten Referenzelementes überschreitet.

Die erfindungsgemässe Lösung ermöglicht eine freie Wahl des Rückkopplungskondensators, d.h. keine Beschränkung des Rückkopplungskondensators auf eine bestimmte Mindestgüte. Dadurch ist beispielsweise auch die Verwendung eines billigen Rückkopplungskondensators möglich. Ein weiterer Vorteil der erfindungsgemässen Lösung besteht darin, dass der zur Glättung dienende Ausgangskondensator bei gleicher Glättungswirkung eine erheblich kleinere Kapazität aufweisen kann, als es bei der Anwendung bekannter Schaltungen ohne die Diode erforderlich wäre. Bei gleicher Glättungswirkung wie bei der bekannten Schaltung ist es daher möglich, anstelle eines Ausgangskondensators mit einer Kapazität von 2200 µF einen Ausgangskondensator mit einer Kapazität von 220 µF auszuwählen.

## Patentansprüche

1. Elektronisches Schaltnetzteil zur Speisung eines Verbrauchers (6) aus einer Eingangsspannungsquelle (20) veränderlicher Spannungshöhe mit einem primär getakteten Sperrwandler mit einem Übertrager (5), dessen Primärwicklung (51) in Reihe zur Kollektor-Emitter-Strecke eines ersten Transistors (1) parallel zur Eingangsspannungsquelle (20) und dessen Sekundärwicklung (52) in Reihe zum Verbraucher (6) und einer ersten Diode (7) geschaltet ist, wobei der Emitter des ersten Transistors (1) über einen ersten Widerstand (8) mit Masse- oder Bezugspotential und die Basis des ersten Transistors (1) über die Reihenschaltung eines Rückkopplungskondensators (9) und eines Rückkopplungswiderstandes (10) an das mit Masse- oder Bezugspotential über die erste Diode (7) verbundene Wicklungsende der Sekundärwicklung (52) des Übertragers (5), über einen zweiten Widerstand (12) an die Primärwicklung (51) des Übertragers (5) und an den Kollektor eines zweiten Transistors (2) angeschlossen ist, dessen Emitter mit Masse- oder Bezugspotential verbunden ist und dessen Basis über ein erstes Referenzelement (11) an die Verbindung der Sekundärwicklung (52) des Übertragers (5) mit dem Verbraucher (6) angeschlossen ist, dadurch gekennzeichnet, dass die Basis des zweiten Transistors (2) zusätzlich über ein zweites Referenzelement (22) an die Verbindung des Emitters des ersten Transistors (1) mit dem ersten Widerstand (8) angeschlossen ist und dass parallel zum Rückkopplungskondensator (9) eine in Richtung eines den ersten Transistor ansteuernden Stromes gepolte Diode (15) geschaltet ist, die mit dem Umschalten des zweiten Transistors (2) in den Sperrzustand die an der Sekundärwicklung (52) des Übertragers (5) anstehende Ausgangsspannung unmittelbar an die Basis des ersten Transistors (1) legt.

2. Elektronisches Schaltnetzteil nach Anspruch 1, dadurch gekennzeichnet, dass die Sperrphase des ersten Transistors (1) so bemessen ist, dass die in dem Übertrager (5) gespeicherte Energie vollständig an den Ausgangskondensator (16) abgegeben wird.

## Claims

1. An electronic switching power supply for supplying power to a load (6) from an input voltage source (20) of variable voltage level, with a primary switched-mode blocking oscillator-type converter including a transformer (5) whose primary coil (51) is connected in series with the collector-emitter circuit of a first transistor (1) in parallel arrangement with the input voltage source (20) and whose secondary coil (52) is connected in series with the load (6) and a first diode (7), with the emitter of the first transistor (1) being connected to ground or reference potential via a first resistor (8), with the base of the first transistor (1) being connected, via a feedback capacitor (9) and a feedback resistor (10) in series arrangement, to the end of the secondary coil (52) of the transformer (5) connected to ground or reference potential via the first diode (7), said base being further connected to the primary coil (51) of the transformer (5) via a second resistor (12) and to the collector of a second transistor (2) whose emitter is connected to ground or reference potential and whose base is connected, via a first reference element (11), to the junction of the secondary coil (52) of the transformer (5) and the load (6), characterized in that the base of the second transistor (2) is additionally connected via a second reference element (22) to the junction of the emitter of the first transistor (1) and the first resistor (8), and in that a diode (15) polarized in the direction of a current controlling the first transistor is connected in parallel with the feedback capacitor (9), said diode applying the output voltage residing at the secondary coil (52) of the transformer (5) directly to the base of the first transistor (1) as the second transistor (2) is placed in its non-conductive state.

2. An electronic switching power supply as claimed in claim 1, characterized in that the OFF period of the first transistor (1) is dimensioned such that the energy stored in the transformer (5) is completely delivered to the output capacitor (16).

**Revendications**

1. Bloc d'alimentation à commutation électronique destiné à l'alimentation d'un consommateur (6) à partir d'une source de tension d'entrée (20) à voltage variable comprenant un convertisseur à oscillateur bloqué à synchronisation primaire avec un transformateur (5) dont l'enroulement primaire (51) est monté en série avec le trajet collecteur/émetteur d'un premier transistor (1) parallèle à la source de tension d'entrée (20) et dont l'enroulement secondaire (52) est monté en série avec le consommateur (6) et une première diode (7), l'émetteur du premier transistor (1) étant raccordé au potentiel de masse ou de référence en passant par une première résistance (8) et la base du premier transistor (1) étant raccordée, par l'intermédiaire du montage en série d'un condensateur de réaction (9) et d'une résistance de réaction (10), à celle des extrémités de l'enroulement secondaire (52) du transformateur (5) qui est reliée par la première diode (7) au potentiel de masse ou de référence et étant raccordée, par une deuxième résistance (12), à l'enroulement primaire (51) du transformateur (5) et au collecteur d'un deuxième transistor (2) dont l'émetteur est relié au potentiel de masse ou de référence et dont la base est raccordée à la liaison entre l'enroulement secondaire (52) du transformateur (5) et le consommateur (6), en passant par un premier élément de référence (11), caractérisé en ce que la base du deuxième transistor (2) est en plus raccordée, par l'intermédiaire d'un deuxième élément de référence (22), à la liaison entre l'émetteur du premier transistor (1) et la première résistance (8) et qu'une diode (15) polarisée en direction d'un courant commandant le premier transistor est montée parallèlement au condensateur de réaction (9), diode qui, lors du passage du deuxième transistor (2) à l'état de blocage, applique directement à la base du premier transistor (1) la tension de sortie présente à l'enroulement secondaire (52) du transformateur (5).

2. Bloc d'alimentation à commutation électronique selon la revendication 1, caractérisé en ce que la phase de blocage du premier transistor (1) est calculée de sorte que l'énergie accumulée dans le transformateur (5) soit délivrée dans son intégralité au condensateur de sortie (16).

0 130 411

# FIG.1

# FIG.3

# FIG.2

7